# EUROPEAN PATENT SPECIFICATION

(11) **EP 4 687 268 B1**
(45) Date of publication and mention of the grant of the patent: **19.08.2026**
(21) Application number: 24213928.5
(22) Date of filing: 19.11.2024
(51) Int. Cl.: H02K 7/06

(54) **SHOCK- ABSORBING DEVICE THAT CONVERTS VIBRATIONAL ENERGY INTO ELECTRIC ENERGY**
STOSSDÄMPFUNGSVORRICHTUNG ZUR UMWANDLUNG VON SCHWINGUNGSENERGIE IN ELEKTRISCHE ENERGIE
DISPOSITIF D'ABSORPTION DE CHOCS QUI TRANSFORME L'ÉNERGIE VIBRATOIRE EN ÉNERGIE ÉLECTRIQUE

(30) Priority: 30.07.2024 CN 202411026007
(43) Date of publication of application: 04.02.2026
(73) Proprietor: Shijiazhuang Jianmu Feed Co., Ltd., Shijiazhuang, Hebei (CN)
(72) Inventor: WEI, Zijie, Shijiazhuang, Hebei (CN); ZHAO, Qiqi, Shijiazhuang, Hebei (CN); WEI, Lulu, Shijiazhuang, Hebei (CN); WEI, Xiuguang, Shijiazhuang, Hebei (CN)
(74) Representative: Cabinet Chaillot

(56) References cited:
- CN-A- 109 642 648
- CN-U- 206 592 471

## Description

### 1. Technical Field

The invention belongs to the technical field of shock-absorbing device, specifically relates to a shock-absorbing device that converts vibrational energy into electric energy.

### 2. Background Art

In modern engineering and mechanical design, shock-absorbing devices are devices used to reduce or absorb mechanical vibrations and shock waves, thereby protecting structures and equipment from damage. Traditional vibration damping techniques mainly include springs, shock absorbers and dampers, which reduce the effects of vibration on structures by absorbing and consuming vibrational energy. However, these techniques mainly focus on vibration suppression without converting the vibrational energy into other forms of energy, and are unable to fully utilize the vibrational energy.

Prior art such as CN110086375A, disclosing a vibratory electrical energy generator, but it uses the vibration of a piezoelectric ceramic piece to generate electrical charges, with a small overall power generation capacity, a low power generation efficiency, and a high production cost, making it difficult to be applied in practice.

CN206592471U discloses an automobile vibration energy repayment bumper shock absorber in accordance with the preamble of claim 1, designed to convert an up and down movement due to vibration into a rotary movement thanks to outer and inner conical helical gears located inside a plurality of sleeves allowed to move in relation to each other.

### 3. Summary of the Invention

The invention aims to overcome the above problems and provide a shock-absorbing device that converts vibrational energy into electric energy, which achieves the purpose of generating electricity by utilizing unidirectional rotating mechanism to convert vibration of the vibration source into unidirectional rotation of the generator rotor. In order to realize the above purpose, the invention adopts the following technical solution:
A shock-absorbing device that converts vibrational energy into electric energy that includes a generator, which is provided with a stator and a rotor; a rotor shaft of the rotor is of hollow tubular design and a rotor shaft inner cavity is provided along an axis inside the rotor shaft of the rotor, and the rotor shaft inner cavity is provided with helical diagonal slideways;
the shock-absorbing device also includes a transmission rod, wherein one end of the transmission rod is inserted into the rotor shaft inner cavity and another end is connectable to an external vibration source, one end of the transmission rod inserted into the rotor shaft inner cavity is provided with a driving head that is coordinated with the helical diagonal slideways, and a unidirectional rotating mechanism is provided in the driving head;
an outside of the transmission rod is equipped with a shock absorbing spring, wherein one end of the shock absorbing spring is pressed on the generator, and another end thereof is fixed on one side of the transmission rod close to the vibration source by means of an insert pin fastener.

The shock absorbing spring is alternately actuated to drive the transmission rod to reciprocate along the rotor shaft inner cavity, which in turn drives the rotor to rotate unidirectionally via the driving head.

As an improvement, a terminal of one end of the transmission rod inserted into the rotor shaft inner cavity is provided with an extension part, the driving head is provided on the extension part and is able to rotate around the extension part, and said driving head is provided with sliders cooperating with the helical diagonal slideways.

As an improvement, the length of the extension part is longer than the length of the driving head, so that the driving head can slide along an axial direction of the extension part.

As an improvement, the unidirectional rotating mechanism comprises snap teeth located at a bottom of the driving head and reverse snap teeth fixed on the transmission rod; said snap teeth and reverse snap teeth are provided with mutually coordinated tilting portion and second tilting portion respectively.

As an improvement, there is a plurality of the snap teeth and reverse snap teeth.

As an improvement, there is a plurality of the helical diagonal slideways and they are arranged in a circumferential array along the axis of the rotor shaft;
the number of sliders is equal to the number of helical diagonal slideways.

As an improvement, cross-section of said slider is taken as an inverted right-angled trapezoid or a rectangle with a chamfer at the top.

Compared with the prior art, the invention has the following advantages:
1. The invention achieves the purpose of generating electricity by utilizing unidirectional rotating mechanism to convert vibration of the vibration source into unidirectional rotation of the generator rotor. The invention can make full use of the vibrational energy and realize the effect of converting vibrational energy into electric energy, reducing the dependence on fossil fuels, and lowering environmental pollution and greenhouse gas emissions.
2. In addition to shock absorption by the shock absorbing spring, the process of the transmission rod moving in the rotor shaft inner cavity and driving the generator rotor to rotate can also carry out effective shock absorption. Compared with the traditional single shock-absorbing device, it has better shock-absorbing effect.
3. The invention can continuously generate electricity with higher power in the presence of a stable vibration source. The vibration source can be a variety of vibration-generating devices or structures, making this device promising for a wide range of applications.
4. The invention has good safety performance, low production cost, lower maintenance cost and easier maintenance process.

### 4. Brief Description of Accompany Drawings

FIG. 1 is a structural diagram of a shock-absorbing device that converts vibrational energy into electric energy of embodiment 1;
FIG. 2 is a structural diagram of the rotor shaft in a shock-absorbing device that converts vibrational energy into electric energy of embodiment 1;

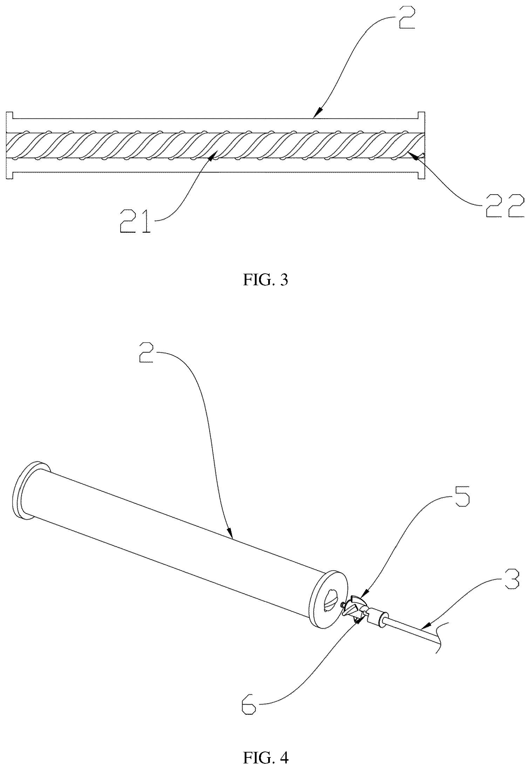

FIG. 3 is an internal structural diagram of the rotor shaft in a shock-absorbing device that converts vibrational energy into electric energy of embodiment 1;
FIG. 4 is a diagram illustrating coordination between the rotor shaft and the transmission rod in a shock-absorbing device that converts vibrational energy into electric energy of embodiment 1;
FIG. 5 is a structural diagram of the driving head and the unidirectional rotating mechanism in a shock-absorbing device that converts vibrational energy into electric energy of embodiment 1.

As shown in the accompanying drawings:
1 generator, 2 rotor shaft, 21 rotor shaft inner cavity, 22 helical diagonal slideway, 3 transmission rod, 31 extension part, 4 vibration source, 5 driving head, 51 slider, 6 unidirectional rotating mechanism, 61 snap tooth, 62 reverse snap tooth, 63 tilting portion, 64 second tilting portion, 7 shock absorbing spring, 71 insert pin fastener.

### 5. Specific Embodiment of the invention

The invention is further described in detail hereinafter with reference to the specific embodiments to enable a better understanding of the invention, but the following embodiments do not limit the protection scope of the invention.

### Embodiment 1

The embodiment discloses a shock-absorbing device that converts vibrational energy into electric energy, including a generator 1, in which is provided with a stator and a rotor; a rotor shaft 2 of the rotor is of hollow tubular design and a rotor shaft inner cavity 21 is provided along an axis inside the rotor shaft 2 of the rotor, and on the rotor shaft inner cavity 21 is provided with helical diagonal slideways 22;

The shock-absorbing device also includes a transmission rod 3, wherein one end of the transmission rod 3 is inserted into the rotor shaft inner cavity 21 and another end is fixed to an external vibration source 4, one end of the transmission rod 3 inserted into the rotor shaft inner cavity 21 is provided with a driving head 5 that is coordinated with the helical diagonal slideways 22, and a unidirectional rotating mechanism 6 is provided in the driving head 5;

The vibration of the vibration source 4 drives the transmission rod 3 to reciprocate along the rotor shaft inner cavity 21, which in turn drives the rotor to rotate unidirectionally via the driving head 5 to generate electricity.

A terminal of one end of the transmission rod 3 inserted into the rotor shaft inner cavity 21 is provided with an extension part 31, the driving head 5 is provided on the extension part 31 and is able to rotate around the extension part 31, and said driving head 5 is provided with sliders 51 cooperating with the helical diagonal slideways 22.

The length of the extension part 31 is longer than the length of the driving head 5, so that the driving head 5 can slide along an axial direction of the extension part 31.

The unidirectional rotating mechanism 6 comprises snap teeth 61 located at a bottom of the driving head 5 and reverse snap teeth 62 fixed on the transmission rod 3; said snap teeth 61 and reverse snap teeth 62 are provided with mutually coordinated tilting portion 63 and second tilting portion 64 respectively.

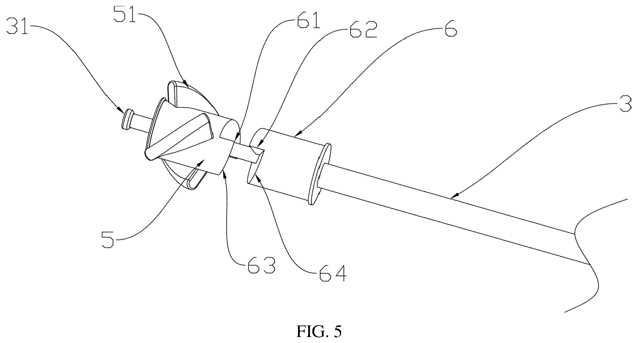

Since the driving head 5 can slide in the axial direction of the extension part 31, this results in an assembly gap between the snap teeth 61 and reverse snap teeth 62. As shown in FIG. 5, when the vibration source 4 drives the transmission rod 3 to move to the right, the driving head 5, guided by the tilting portion 63 and the second tilting portion 64, is secured by snap-fitting the snap teeth 61 with the reverse snap teeth 62. Accordingly, the driving head 5 is driven to move towards the helical diagonal slideways 22 at right, generating a rotational torque and thus driving the rotor to rotate. When the vibration source 4 drives the transmission rod 3 to the left, the snap teeth 61 are disengaged from the reverse snap teeth 62, releasing the rotational locking of the driving head 5, thus achieving the purpose of driving the rotor to rotate in one direction only.

In the embodiment, there are two snap teeth 61 and reverse snap teeth 62 respectively. There are three helical diagonal slideways 22 and they are arranged in a circumferential array along the axis of the rotor shaft 2. The number of sliders 51 is equal to the number of helical diagonal slideways 22.

The cross-section of said slider 51 is taken as an inverted right-angled trapezoid.

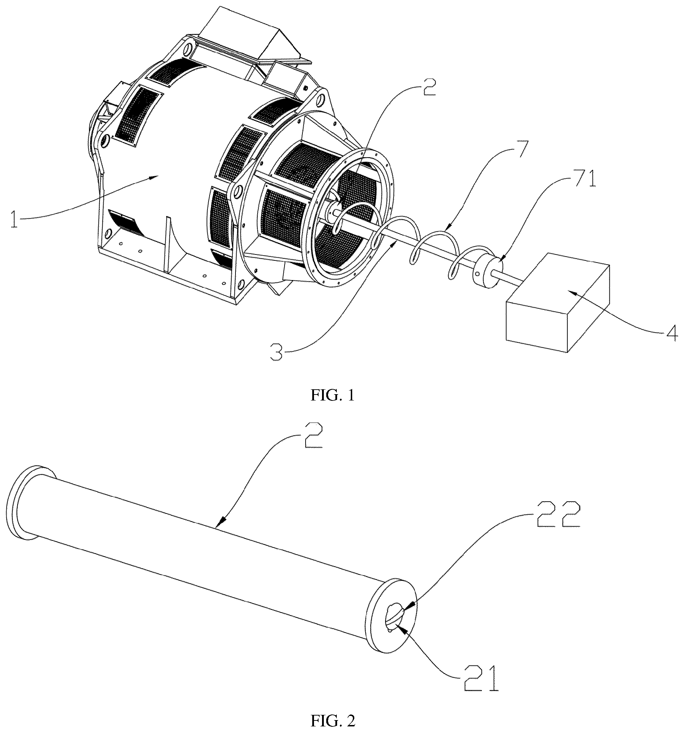

In the embodiment, on an outside of the transmission rod 3 is equipped with a shock absorbing spring 7, wherein one end of the shock absorbing spring 7 is pressed on the generator 1, and another end thereof is fixed on one side of the transmission rod 3 close to the vibration source 4 by means of an insert pin fastener 71. The shock absorbing spring 7 can play the role of shock absorption and bouncing. As shown in FIG. 1, the shock absorbing spring 7 is compressed when the driving rod 3 is moved to the left, which plays the effect of shock absorption and cushioning; when the vibration force to the left disappears, the compressed shock absorbing spring 7 bounces back and pushes the transmission rod 3 to the right, and the reverse snap teeth 62 disposed on the driving rod 3 are separated from the snap teeth 61, so as to achieve the purpose of releasing locking. After unlocking, the driving head 5 is driven by the helical diagonal slideways 22 in the rotor shaft inner cavity 21 to rotate following the rotation of the rotor shaft 2, and at the same time, driven by the extension part 31, it moves to the left to prepare for the next driving rotation of the rotor shaft 2. The purpose of continuously driving unidirectional rotation of the rotor shaft 2 can be achieved by repeating in this way.

The invention and its embodiments have been described above, but the description is not limited thereto; only one embodiment of the invention is shown in the drawings, and the actual structure is not limited thereto. In general, it is to be understood by those skilled in the art that non-creative design of structural forms and embodiments that are similar to the technical solutions without departing from the scope of the invention as defined in the appended claims.

## Claims

1. A shock-absorbing device that converts vibrational energy into electric energy, that includes a generator (1), which is provided with a stator and a rotor; wherein a rotor shaft (2) of the rotor is of hollow tubular design and a rotor shaft inner cavity (21) is provided along an axis inside the rotor shaft (2) of the rotor, and the rotor shaft inner cavity (21) is provided with helical diagonal slideways (22);
**characterized in that** the shock-absorbing device also includes a transmission rod (3), wherein one end of the transmission rod (3) is inserted into the rotor shaft inner cavity (21) and another end is connectable to an external vibration source (4), one end of the transmission rod (3) inserted into the rotor shaft inner cavity (21) is provided with a driving head (5) that is coordinated with the helical diagonal slideways (22), and a unidirectional rotating mechanism (6) is provided in the driving head (5);
an outside of the transmission rod (3) is equipped with a shock absorbing spring (7), wherein one end of the shock absorbing spring (7) is pressed on the generator (1), and another end thereof is fixed on one side of the transmission rod (3) close to the vibration source (4) by means of an insert pin fastener (71);
the shock absorbing spring (7) is alternately actuated to drive the transmission rod (3) to reciprocate along the rotor shaft inner cavity (21), which in turn drives the rotor to rotate unidirectionally via the driving head (5).

2. The shock-absorbing device that converts vibrational energy into electric energy of claim 1, wherein a terminal of one end of the transmission rod (3) inserted into the rotor shaft inner cavity (21) is provided with an extension part (31), the driving head (5) is provided on the extension part (31) and is able to rotate around the extension part (31), and said driving head (5) is provided with sliders (51) cooperating with the helical diagonal slideways (22).

3. The shock-absorbing device that converts vibrational energy into electric energy of claim 2, wherein the length of the extension part (31) is longer than the length of the driving head (5), so that the driving head (5) can slide along an axial direction of the extension part (31).

4. The shock-absorbing device that converts vibrational energy into electric energy of claim 2, wherein the unidirectional rotating mechanism (6) comprises snap teeth (61) located at a bottom of the driving head (5) and reverse snap teeth (62) fixed on the transmission rod (3); said snap teeth (61) and reverse snap teeth (62) are provided with mutually coordinated tilting portion (63) and second tilting portion (64) respectively.

5. The shock-absorbing device that converts vibrational energy into electric energy of claim 4, wherein there is a plurality of the snap teeth (61) and reverse snap teeth (62).

6. The shock-absorbing device that converts vibrational energy into electric energy of claim 2, wherein there is a plurality of the helical diagonal slideways (22) and they are arranged in a circumferential array along the axis of the rotor shaft (2);
the number of sliders (51) is equal to the number of helical diagonal slideways (22).

7. The shock-absorbing device that converts vibrational energy into electric energy of claim 2, wherein cross-section of said slider (51) is taken as an inverted right-angled trapezoid.

## Patentansprüche

1. - Stoßdämpfungsvorrichtung, die Schwingungsenergie in elektrische Energie umwandelt, die einen Generator (1) beinhaltet, der mit einem Stator und einem Rotor versehen ist; wobei eine Rotorwelle (2) des Rotors von hohler rohrförmiger Konstruktion ist und ein innerer Rotorwellenhohlraum (21) entlang einer Achse innerhalb der Rotorwelle (2) des Rotors bereitgestellt ist und der innere Rotorwellenhohlraum (21) spiralförmigen diagonalen Gleitbahnen (22) versehen ist;
**dadurch gekennzeichnet, dass** die Stoßdämpfungsvorrichtung auch eine Übertragungsstange (3) beinhaltet, wobei ein Ende der Übertragungsstange (3) in den inneren Rotorwellenhohlraum (21) eingeführt ist und ein anderes Ende mit einer externen Schwingungsquelle (4) verbindbar ist, ein Ende der Übertragungsstange (3), das in den inneren Rotorwellenhohlraum (21) eingeführt ist, mit einem Antriebskopf (5) versehen ist, der mit den spiralförmigen diagonalen Gleitbahnen (22) zusammenwirkt, und in dem Antriebskopf (5) ein unidirektionalen Drehmechanismus (6) bereitgestellt ist;
eine Außenseite der Übertragungsstange (3) mit einer Stoßdämpfungsfeder (7) ausgestattet ist, wobei ein Ende der Stoßdämpfungsfeder (7) an den Generator (1) gedrückt wird und ein anderes Ende davon mittels eines Einsteckstiftbefestigungselements (71) an einer Seite der Übertragungsstange (3) nahe der Schwingungsquelle (4) befestigt ist;
die Stoßdämpfungsfeder (7) wechselweise betätigt wird, um die Übertragungsstange (3) anzutreiben, um sich in dem inneren Rotorwellenhohlraum (21) hin- und herzubewegen, wodurch wiederum der Rotor angetrieben wird, um über den Antriebskopf (5) unidirektional zu drehen.

2. - Stoßdämpfungsvorrichtung, die Schwingungsenergie in elektrische Energie umwandelt, nach Anspruch 1, wobei ein Abschluss von einem Ende der Übertragungsstange (3), das in den inneren Rotorwellenhohlraum (21) eingeführt ist, mit einem Verlängerungsteil (31) versehen ist, der Antriebskopf (5) an dem Verlängerungsteil (31) bereitgestellt ist und in der Lage ist, um das Verlängerungsteil (31) zu drehen, und der Antriebskopf (5) mit Gleitstücken (51) versehen ist, die mit den spiralförmigen diagonalen Gleitbahnen (22) zusammenwirken.

3. - Stoßdämpfungsvorrichtung, die Schwingungsenergie in elektrische Energie umwandelt, nach Anspruch 2, wobei die Länge des Verlängerungsteils (31) größer ist als die Länge des Antriebskopfs (5), sodass der Antriebskopf (5) entlang einer axialen Richtung des Verlängerungsteils (31) gleiten kann.

4. - Stoßdämpfungsvorrichtung, die Schwingungsenergie in elektrische Energie umwandelt, nach Anspruch 2, wobei der unidirektionale Drehmechanismus (6) Rastzähne (61), die sich an einem Boden des Antriebskopfs (5) befinden, und umgekehrte Rastzähne (62), die an der Übertragungsstange (3) befestigt sind, umfasst; die Rastzähne (61) und umgekehrten Rastzähne (62) jeweils mit einem miteinander zusammenwirkenden Neigungsabschnitt (63) und zweiten Neigungsabschnitt (64) versehen sind.

5. - Stoßdämpfungsvorrichtung, die Schwingungsenergie in elektrische Energie umwandelt, nach Anspruch 4, wobei es eine Vielzahl der Rastzähne (61) und umgekehrten Rastzähne (62) gibt.

6. - Stoßdämpfungsvorrichtung, die Schwingungsenergie in elektrische Energie umwandelt, nach Anspruch 2, wobei es eine Vielzahl der spiralförmigen diagonalen Gleitbahnen (22) gibt und diese in einer Umfangsanordnung entlang der Achse der Rotorwelle (2) angeordnet sind;
die Anzahl an Gleitstücken (51) gleich wie die Anzahl der spiralförmigen diagonalen Gleitbahnen (22) ist.

7. - Stoßdämpfungsvorrichtung, die Schwingungsenergie in elektrische Energie umwandelt, nach Anspruch 2, wobei ein Querschnitt des Gleitstücks (51) als umgekehrtes rechtwinkliges Trapez genommen wird.

## Revendications

1. - Dispositif d'absorption de chocs qui convertit de l'énergie vibratoire en énergie électrique, qui comprend un générateur (1), qui comporte un stator et un rotor ; un arbre de rotor (2) du rotor étant de conception tubulaire creuse et une cavité interne d'arbre de rotor (21) étant ménagée le long d'un axe à l'intérieur de l'arbre de rotor (2) du rotor, et la cavité interne d'arbre de rotor (21) comportant des glissières diagonales hélicoïdales (22) ;
**caractérisé par le fait que**
le dispositif d'absorption de chocs comprend également une tige de transmission (3), une première extrémité de la tige de transmission (3) étant introduite dans la cavité interne d'arbre de rotor (21) et une autre extrémité étant apte à être reliée à une source de vibration externe (4), une première extrémité de la tige de transmission (3) introduite dans la cavité interne d'arbre de rotor (21) comportant une tête d'entraînement (5) qui est coordonnée avec les glissières diagonales hélicoïdales (22), et un mécanisme de rotation unidirectionnelle (6) étant prévu dans la tête d'entraînement (5) ;
un extérieur de la tige de transmission (3) est équipé d'un ressort d'absorption de chocs (7), une première extrémité du ressort d'absorption de chocs (7) étant appuyée contre le générateur (1), et l'autre extrémité de celui-ci étant fixée sur un premier côté de la tige de transmission (3) à proximité de la source de vibration (4) au moyen d'une fixation à broche à insertion (71) ;
le ressort d'absorption de chocs (7) est actionné en alternance pour entraîner la tige de transmission (3) à effectuer un mouvement de va-et-vient le long de la cavité interne d'arbre de rotor (21), ce qui entraîne à son tour le rotor à tourner de manière unidirectionnelle par l'intermédiaire de la tête d'entraînement (5).

2. - Dispositif d'absorption de chocs qui convertit de l'énergie vibratoire en énergie électrique selon la revendication 1, dans lequel un bout d'une première extrémité de la tige de transmission (3) introduite dans la cavité interne d'arbre de rotor (21) comporte une partie d'extension (31), la tête d'entraînement (5) est prévue sur la partie d'extension (31) et est apte à tourner autour de la partie d'extension (31), et ladite tête d'entraînement (5) comporte des coulisseaux (51) coopérant avec les glissières diagonales hélicoïdales (22).

3. - Dispositif d'absorption de chocs qui convertit de l'énergie vibratoire en énergie électrique selon la revendication 2, dans lequel la longueur de la partie d'extension (31) est supérieure à la longueur de la tête d'entraînement (5), de telle sorte que la tête d'entraînement (5) peut coulisser le long d'une direction axiale de la partie d'extension (31).

4. - Dispositif d'absorption de chocs qui convertit de l'énergie vibratoire en énergie électrique selon la revendication 2, dans lequel le mécanisme de rotation unidirectionnelle (6) comprend des dents d'encliquetage (61) situées à une base de la tête d'entraînement (5) et des dents d'encliquetage inverses (62) fixées sur la tige de transmission (3) ; lesdites dents d'encliquetage (61) et lesdites dents d'encliquetage inverses (62) comportent respectivement une partie inclinée (63) et une seconde partie inclinée (64) coordonnées entre elles.

5. - Dispositif d'absorption de chocs qui convertit de l'énergie vibratoire en énergie électrique selon la revendication 4, dans lequel il y a une pluralité de dents d'encliquetage (61) et de dents d'encliquetage inverses (62).

6. - Dispositif d'absorption de chocs qui convertit de l'énergie vibratoire en énergie électrique selon la revendication 2, dans lequel il y a une pluralité de glissières diagonales hélicoïdales (22) qui sont disposées en un agencement circonférentiel le long de l'axe de l'arbre de rotor (2) ;
le nombre de coulisseaux (51) est égal au nombre de glissières diagonales hélicoïdales (22).

7. - Dispositif d'absorption de chocs qui convertit de l'énergie vibratoire en énergie électrique selon la revendication 2, dans lequel une section transversale dudit coulisseau (51) a la forme d'un trapèze à angle droit inversé.
